# EUROPEAN PATENT APPLICATION

(11) **EP 1 598 322 A1**
(43) Date of publication of application: **23.11.2005**
(21) Application number: 05010310.0
(22) Date of filing: 12.05.2005
(51) Int. Cl.: C03B 37/012

(54) **Method and apparatus for overcladding glass rod**

(30) Priority: 15.05.2004 KR 2004034537
(71) Applicant: SAMSUNG ELECTRONICS CO., LTD., Suwon-si, Gyeonggi-do 442-742 (KR)
(72) Inventor: Oh, Sung-Koog, Yeongtong-gu Suwon-si Gyeonggi-do (KR); Kwak, Ki-Moon, Yeongtong-gu Suwon-si Gyeonggi-do (KR); Kim, Young-Seok, Yeongtong-gu Suwon-si Gyeonggi-do (KR)
(74) Representative: Lang, Johannes

(57) **Abstract**

Disclosed are a method and apparatus for overcladding a glass rod with a glass tube. The method includes (a) preparing a sealing tube, provided with a hole formed through the central portion thereof, (b) attaching the sealing tube to an upper end of the glass tube, (c) aligning the glass rod with the glass tube such that the glass rod is inserted into the sealing tube and (d) sealing an upper end of the sealing tube by heating an outer wall of the sealing tube.

## Description

### BACKGROUND OF THE INVENTION

### 1. Field of the Invention

The present invention relates to an optical fiber preform, and more particularly to a method and apparatus for overcladding a glass rod with a glass tube.

### 2. Description of the Related Art

As demand for optical fibers increases, research into improving the productivity of MCVD (modified chemical vapor deposition) has been undertaken. In order to obtain an optical fiber having the superior optical characteristics and a high stability in geometry, an optical fiber preform must have a constant ratio of a core to a clad layer in a designated limited range. One method for improving the productivity in MCVD is when a glass rod is inserted into the glass tube having a ratio of the core to the clad layer higher than a preferable value is prepared, and the glass tube is then collapsed onto the glass rod.

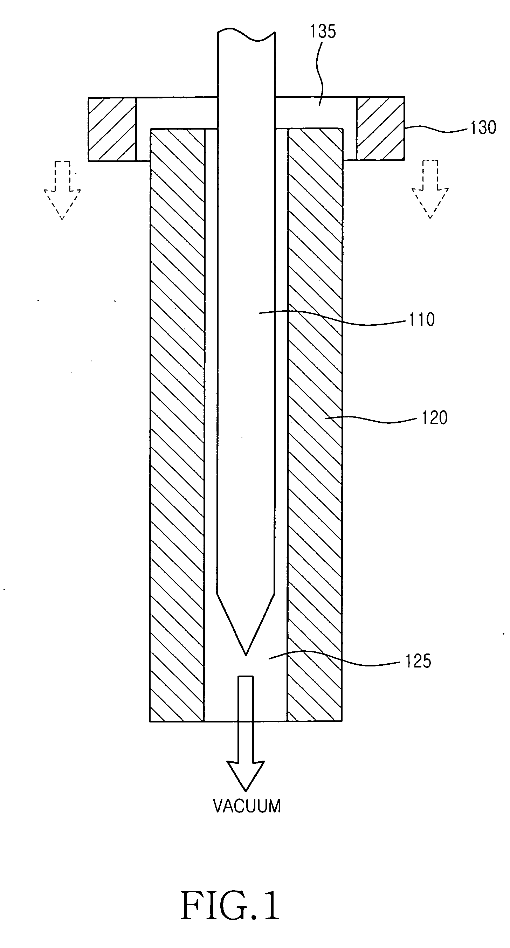

U.S. Patent Serial No. 4,820,322 issued to Baumgart, *et al.* discloses a method and apparatus for overcladding a glass rod. The above overcladding method is described with regard to Fig. 1, which is a schematic view illustrating a method for overcladding a glass rod. A conventional overcladding apparatus comprises a glass rod 110, a glass tube 120 provided with a hole 125 formed through the central portion thereof, and a circular burner 130 provided with a hole 135 formed through the central portion thereof. The glass rod 110 and the glass tube 120 are coaxially aligned. First, the glass rod 110 is inserted into the glass tube 120, and the glass rod 110 and the glass tube 120 are coaxially aligned so as to minimize eccentricity of the glass rod 110. Further, the interval between the outer circumference of the glass rod 110 and the inner circumference of the glass tube 120 is limited to less than 1.5mm, thereby minimizing the deformation of the glass rod 110 and the glass tube 120 to oval shapes. Next, the burner 130 is placed adjacent to the upper end of the glass tube 120 and heats the outer wall of the glass tube 120, thereby sealing the upper end of the glass tube 120. That is, the upper part of the glass tube 120 is collapsed onto the glass rod 110. The above sealing process is performed by maintaining the pressure in the glass tube 120 below the external pressure using a vacuum pump connected to the lower end of the glass tube 120 as well as by heating the glass tube 120 using the burner 130. Finally, the burner 130 is shifted to the lower end of the glass tube 120, and continuously collapses the glass tube 120 onto the glass rod 110. Here, the pressure in the glass tube 120 is maintained below the external pressure.

However, the above-described method has several problems. First, external foreign substances may be introduced into the glass tube 120 during the above sealing process as the pressure in the glass tube 120 is below the external pressure. Second, as the increase in the thickness of the wall of the glass tube 120 causes a difficulty of transmit heat generated from the burner 130 to the glass tube 120, thus, sealing of the glass tube 120 is not easily achieved and air bubbles remain between the glass tube 120 and the glass rod 110. In this case, the interval between the glass tube 120 and the glass rod 110 cannot be easily reduced, thereby being incapable of satisfying the trend towards large caliber of the glass tube 120 and minimizing the eccentricity of the optical fiber.

### SUMMARY OF THE INVENTION

Therefore, the present invention has been made in view of the above problems, and it is an object of the present invention to provide a method and apparatus for overcladding a glass rod with a glass tube, in which the introduction of foreign substances into the glass tube during an overcladding process is prevented and the glass tube is easily sealed.

In accordance with one aspect of the present invention, the above and other objects can be accomplished by the provision of a method for overcladding a glass rod with a glass tube comprising the steps of (a) preparing a sealing tube, provided with a hole formed through the central portion thereof, (b) attaching the sealing tube to an upper end of the glass tube, (c) aligning the glass rod with the glass tube such that the glass rod is inserted into the sealing tube, and (d) sealing an upper end of the sealing tube by heating an outer wall of the sealing tube.

In accordance with another aspect of the present invention, there is provided an apparatus for overcladding a glass rod with a glass tube comprising a glass tube having a hollow cylinder structure provided with a hole formed through the central portion thereof, a sealing tube, attached to an upper end of the glass tube, having a hollow cylinder structure provided with a hole formed through the central portion thereof, a glass rod inserted into the glass tube such that the glass rod passes through the sealing tube, and a burner heating an outer wall of the sealing tube for sealing an upper end of the sealing tube.

### BRIEF DESCRIPTION OF THE DRAWINGS

The above features and other advantages of the present invention will be more clearly understood from the following detailed description taken in conjunction with the accompanying drawings, in which:
- Fig. 1: is a schematic view illustrating a conventional method for overcladding a glass rod;
- Fig. 2: is a schematic view of an apparatus for overcladding a glass rod in accordance with a preferred embodiment of the present invention;
- Fig. 3: is a perspective view of a sealing tube shown in Fig. 2;
- Fig. 4: is a bottom view of the sealing tube shown in Fig. 3;
- Fig. 5: is a plan view of the sealing tube shown in Fig. 3;
- Fig. 6: is a schematic view illustrating a process for sealing the sealing tube shown in Fig. 2;
- Fig. 7: is a cross-sectional view, taken along the line A-A, of the sealing tube shown in Fig. 6;
- Fig. 8: is a cross-sectional view, taken along the line B-B, of a glass tube shown in Fig. 6; and
- Fig. 9: is a schematic view illustrating a process for collapsing the glass tube shown in Fig. 2.

### DETAILED DESCRIPTION OF THE INVENTION

Now, embodiments of the present invention will be described in detail with reference to the annexed drawings. For the purposes of clarity and simplicity, a detailed description of known functions and configurations incorporated herein will be omitted as it may make the subject matter of the present invention unclear.

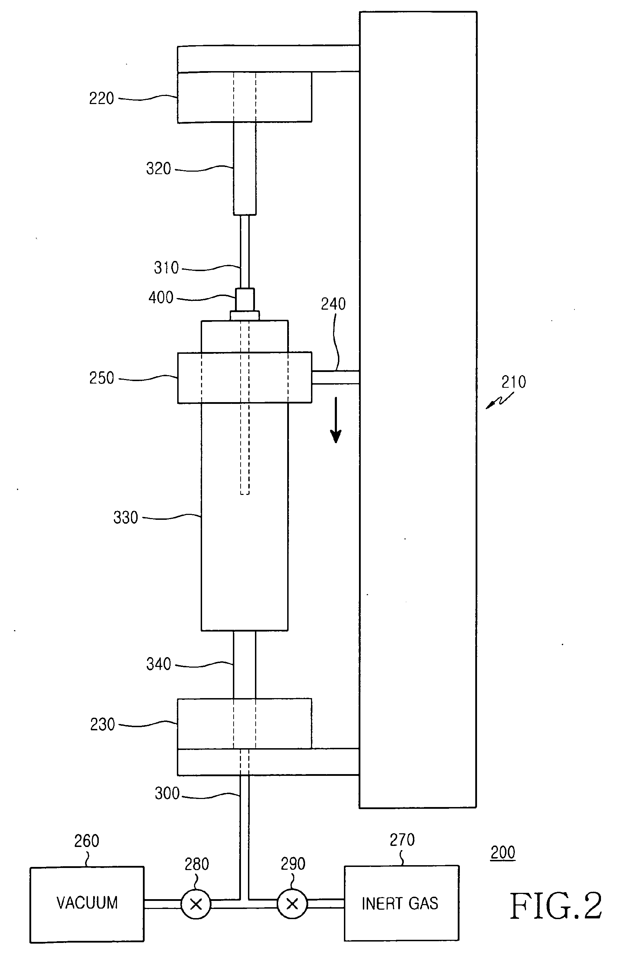

Fig. 2 is a schematic view of an apparatus for overcladding a glass rod in accordance with a preferred embodiment of the present invention. The apparatus 200 comprises a glass rod 310, a glass tube 330, a dummy rod 320, a dummy tube 340, a sealing tube 400, a lathe 210, an H₂/O₂ burner 250, an inert gas provider 270, a vacuum pump 260, and first and second valves 280 and 290.

The glass rod 310 includes a core and a clad layer, and may be manufactured by a MCVD process. The glass rod 310 has a circular cross-section.

The dummy rod 320 has a diameter larger than that of the glass rod 310, and is attached to the upper end of the glass rod 310. The dummy rod 320 has a circular cross-section, and is made of preferably glass.

The glass tube 330 has a hollow cylinder structure provided with a hole formed through the central portion thereof, and has an inner diameter larger than the outer diameter of the glass rod 310.

The dummy tube 340 has a hollow cylinder structure provided with a hole formed through the central portion thereof, and is attached to the lower end of the glass tube 330. The dummy tube 340 has an outer diameter smaller than that of the glass tube 330 and an inner diameter to accommodate the glass tube 330. The dummy tube 340 is preferably made of glass.

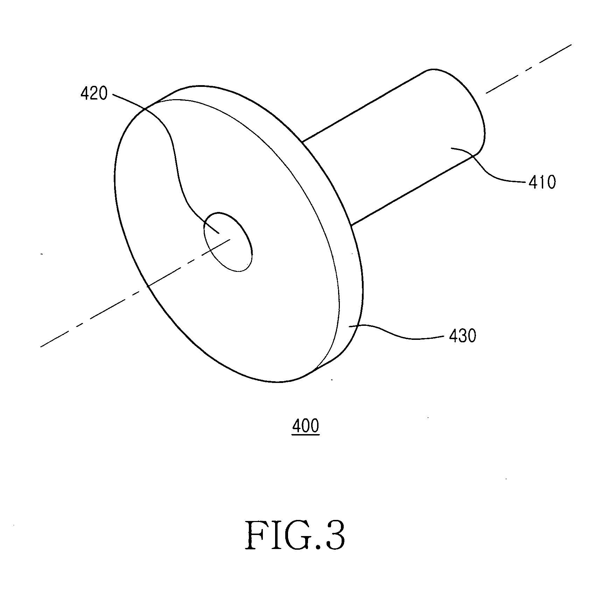

Hereinafter, with reference to Figs. 3 to 5, the sealing tube 400 will be described in detail.

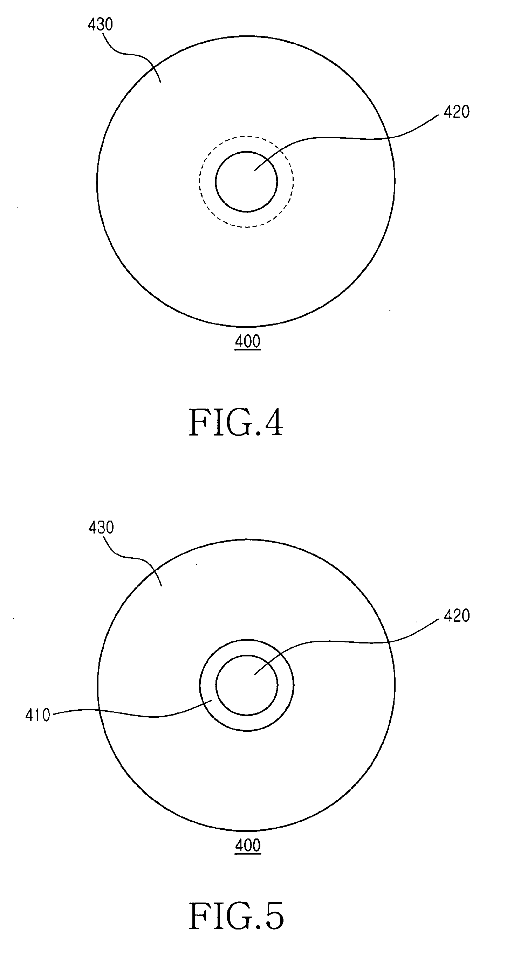

Fig. 3 is a perspective view of the sealing tube 400, Fig. 4 is a bottom view of the sealing tube 400, and Fig. 5 is a plan view of the sealing tube 400. The sealing tube 400 includes a main body 410 having a hollow cylinder structure provided with a hole 420 formed through the central portion thereof, and a flange 430 outwardly extended from one end of the main body 410 and having a circular shape. The sealing tube 400 has an inner diameter (or, the diameter of the hole formed therethrough) smaller than that of the glass tube 330, and a wall thickness (or, the wall thickness of the main body 410) smaller than that of the glass tube 330. The flange 430 has an outer diameter larger than the inner diameter of the glass tube 330 and smaller than the outer diameter of the glass tube 330. Alternately, the sealing tube 400 may have an inner diameter the same as the inner diameter of the glass tube 330. The lower end of the sealing tube 400 (or, the bottom surface of the flange 430) is attached to the upper end of the glass tube 330. Since the wall thickness of the sealing tube 400 is smaller than that of the glass tube 330, heat transfer is easily achieved during a sealing process using the burner 250, thereby allowing the sealing tube 400 to be more rapidly and effectively reduced in size and sealed, compared to the glass tube 330.

Returning to Fig. 2, the lathe 210 includes a top chuck 220 for vertically fixing the glass rod 310, a bottom chuck 230 for vertically fixing the glass tube 330, and a carriage 240 being movable vertically. The top chuck 220 holds the dummy rod 320, thus fixing the glass rod 310, and the bottom chuck 230 holds the dummy tube 340, thus fixing the glass tube 330.

The sealing tube 400 is attached to the upper end the glass tube 330 such that the sealing tube 400 is coaxially aligned with the glass tube 330, and the glass rod 310 is inserted into the sealing tube 400 and the glass tube 330 such that the glass rod 310 is coaxially aligned with the sealing tube 400 and the glass tube 330. That is, the glass rod 310, the sealing tube 400 and the glass tube 330 are coaxially aligned.

The inert gas provider 270 is connected to a conveying pipe 300 connected to the lower end of the dummy tube 340, and supplies inert gas until the sealing process of the sealing tube 400 is completed, thereby preventing foreign substances from being introduced into the glass tube 330. Thus, as the inert gas is supplied to the glass tube 330, the pressure in the glass tube 330 is higher than the external pressure, thereby preventing foreign substances from being introduced into the glass tube 330. Here, the inert gas may be well-known inert gasses, such as Helium (He₂), Argon (Ar₂), Nitrogen (N₂) etc.

The vacuum pump 260 is connected to the conveying pipe 300, and serves to apply a vacuum to the inside of the glass tube 330 until a collapsing process after the sealing process is completed. Thus, the inside of the glass tube 330 is in a vacuum state so that the pressure in the glass tube 330 is below the external pressure, thereby performing the process in which the glass tube 330 is collapsed onto the glass rod 310.

The first valve 280 is installed on a pipe line between a branch portion of the conveying pipe 300 and the vacuum pump 260, and serves to open and close the corresponding pipe line.

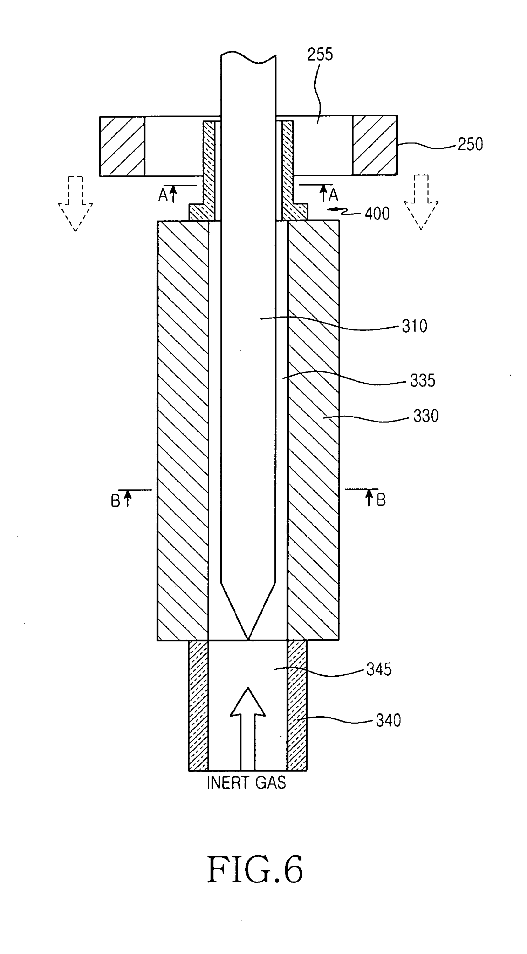

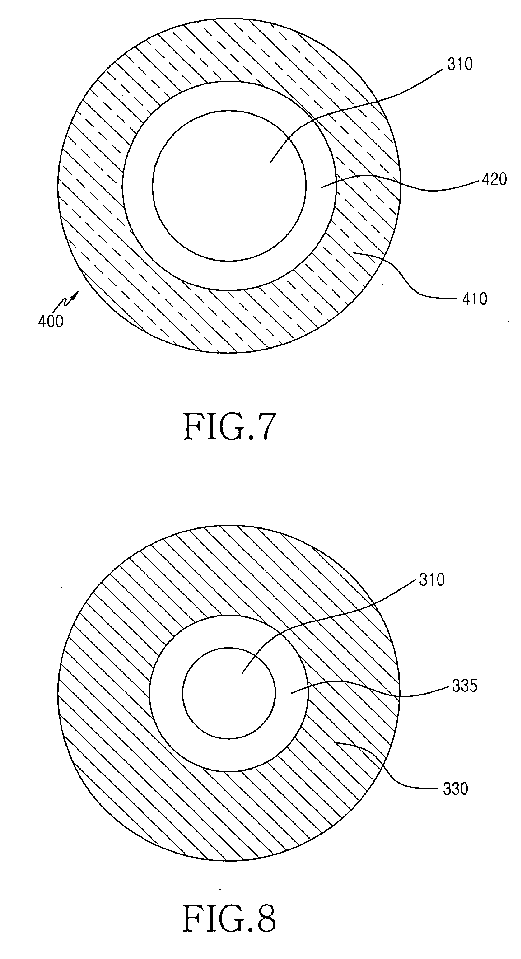

Fig. 6 is a schematic view illustrating a process for sealing the sealing tube 400, Fig. 7 is a cross-sectional view, taken along the line A-A, of the sealing tube 400, and Fig. 8 is a cross-sectional view, taken along the line B-B, of the glass tube 330. The glass rod 310 is inserted into the sealing tube 400 and the glass tube 330. During the above inserting process, the inert gas provider 270 supplies inert gas into the glass tube 330. Here, the inert gas is supplied to the glass tube 330 from the time when the glass rod 310 is inserted into the sealing tube 400 and the glass tube 330 to the time when the sealing of the sealing tube 400 is completed. For this reason, the inert gas provider 270 operates under the condition that the second valve 290 is opened and the first valve 280 is closed.

The burner 250 surrounds the outer circumference of the upper part of the sealing tube 400, and heats the upper part of the outer wall of the sealing tube 400 (or, the upper part of the main body 410 of the sealing tube 400), thereby softening the upper part of the outer wall of the sealing tube 400. After the upper part of the sealing tube 400 is sufficiently softened, the upper end of the sealing tube 400 is reduced by a scoop-shaped paddle, hence, providing a sealing of glass tube 300. In this case, the paddle is pressed onto the upper part of the sealing tube 400 (for example, the outer circumference of the sealing tube 400 is pressed by the paddle going round the sealing tube 400), thereby sealing the sealing tube 400. The paddle is preferably made of Teflon, however, other well-known heat resistant materials may be used

The sealing tube 400 has a wall thickness smaller than that of the glass tube 330, thereby allowing heat generated from the burner 250 to be easily transferred to the sealing tube 400 during the sealing process of the sealing tube 400 using the burner 250. Further, the inert gas supplied to the glass tube 330 prevents foreign substances from being introduced into the glass tube 330.

Conventionally, in order to prevent the incomplete sealing of the glass tube 330, the maximum value of the wall thickness of the glass tube 330 or the interval between the inner circumference of the glass tube 330 and the outer circumference of the glass rod 310 is limited. However, in accordance with the present invention, the glass tube 330 is easily sealed using the sealing tube 400, thereby increasing the interval between the inner circumference of the glass tube 330 and the outer circumference of the glass rod 310 from 1.5mm to 3.2mm. By increasing the interval between the inner circumference of the glass tube 330 and the outer circumference of the glass rod 310, it is possible to keep the eccentricity of the optical fiber below 0.5 micrometers.

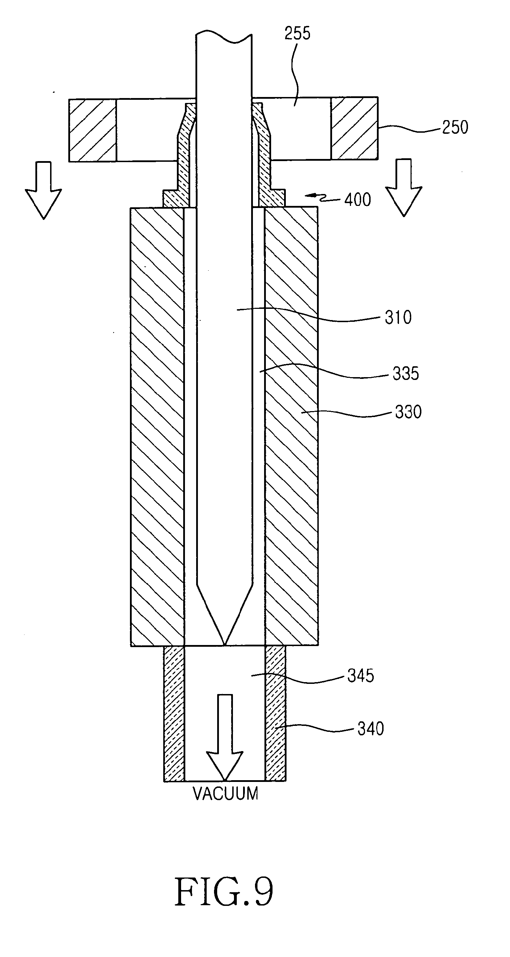

Fig. 9 is a schematic view illustrating a process for collapsing the glass tube 330. The vacuum pump 260 operates under the condition that the second valve 290 is closed and the first valve 280 is opened. The vacuum pump 260 applies a vacuum to the inside of the glass tube 330, thereby causing the inside of the glass tube 330 to have a pressure below the external pressure and thus performing the collapsing process. The burner 250 heats the outer circumference of the glass tube 330 to a high temperature. Flames generated from the burner 250 contact the outer circumference of the glass tube 330, and heat is transferred from the flames to the glass tube 330 in radial and longitudinal directions of the glass tube 330 by convection, conduction and radiation. The glass tube 330 has a reduced viscosity due to the conducted heat, and collapses onto the glass rod 310 by a pressure difference between the inside and outside of the glass tube 330.

By the above sealing and collapsing processes, the glass tube 330 is collapsed onto the glass rod 310, thereby completing the overcladding process of the glass rod 310.

As apparent from the above description, the present invention provides a method and apparatus for overcladding a glass rod using a sealed tube, thereby preventing foreign substances from being introduced into a glass tube.

Further, the overcladding method and apparatus of the present invention increase a wall thickness of the glass tube or an interval between the inner circumference of the glass tube and the outer circumference of the glass rod compared to conventional overcladding method and apparatus, thereby satisfying the trend towards large caliber of an optical fiber preform and minimizing the eccentricity of the optical fiber.

Although a preferred embodiment of the present invention has been described in detail, those skilled in the art will appreciate that various modifications, additions, and substitutions to the specific elements are possible, without departing from the scope and spirit of the invention as disclosed in the accompanying claims.

## Claims

1. A method for overcladding a glass rod with a glass tube comprising the steps of:
(a) preparing a sealing tube provided with a hole formed through the central portion thereof
(b) attaching the sealing tube to an upper end of the glass tube;
(c) aligning the glass rod with the glass tube such that the glass rod is inserted into the sealing tube; and
(d) sealing an upper end of the sealing tube by heating an outer wall of the sealing tube.

2. The method as set forth in claim 1, further comprising the step of:
providing an inert gas to the inside of the glass tube sealed by the sealing tube.

3. The method as set forth in claim 1, wherein the glass rod, the sealing tube and the glass tube are coaxially aligned.

4. The method as set forth in claim 1, further comprising the step of:
collapsing the glass tube onto the glass rod by heating an outer wall of the glass tube.

5. The method as set forth in claim 4, wherein the inside of the glass tube is maintained in a vacuum state.

6. An apparatus for overcladding a glass rod with a glass tube comprising:
a glass tube having a hollow cylinder structure provided with a hole formed through the central portion thereof, said glass tube having a known diameter;
a sealing tube, attached to an upper end of the glass tube, having a hollow cylinder structure provided with a hole formed through the central portion thereof and a flange on one end of said sealing tube having a diameter greater than a diameter of the glass rod but less than a diameter of the glass tube;
a glass rod inserted into the glass tube such that the glass rod passes through the sealing tube; and
a burner heating an outer wall of the sealing tube for sealing an upper end of the sealing tube.

7. The apparatus as set forth in claim 6, further comprising:
an inert gas provider for supplying inert gas to the inside of the glass tube during the sealing of the sealing tube.

8. The apparatus as set forth in claim 6, wherein the burner heats an outer wall of the glass tube for collapsing the glass tube onto the glass rod.

9. The apparatus as set forth in claim 8, further comprising:
a vacuum pump for applying a vacuum to the inside of the glass tube during the collapsing the glass tube onto the glass rod.

10. An apparatus for overcladding a glass rod with a glass tube comprising:
means for co-axially aligning a glass tube having a hollow cylinder structure provided with a hole formed through the central portion thereof; a sealing tube, attached to an upper end of the glass tube, having a hollow cylinder structure provided with a hole formed through the central portion thereof ; and a glass rod inserted into the glass tube such that the glass rod passes through the sealing tube;
a burner for heating the sealing tube and the glass tube;
an inert gas provider for supplying inert gas through a first value to the inside of the glass tube as heat is applied to the sealing tube; and
a vacuum pump for creating a vacuum, through a second value, in the inside of the glass tube during the collapsing the glass tube onto the glass rod.

11. The apparatus as set forth in claim 10, further comprising;
a paddle extending around and compressing the sealing tube behind the heating provided by the burner.

12. The apparatus as set forth in claim 11, wherein the paddle is composed of Teflon.

13. The apparatus as set forth in claim 10, wherein the inert gas provider provides an inert gas at a higher than atmospheric pressure.

14. The apparatus as set forth in claim 10, wherein the sealing tube further comprises a flange on one end having a diameter greater than a diameter of the glass rod but less than a diameter of the glass tube.

15. The apparatus as recited in claim 10, further comprising:
means for moving the burner along a length of the glass tube.

16. The apparatus as recited in claim 10, wherein a wall thickness of the sealing tube is less than a wall thickness of the glass tube.
